# EUROPÄISCHE PATENTSCHRIFT

(11) **EP 0 991 488 B1**
(45) Veröffentlichungstag und Bekanntmachung des Hinweises auf die Patenterteilung: **21.08.2002**
(21) Anmeldenummer: 98934988.1
(22) Anmeldetag: 20.06.1998
(51) Int. Cl.: B22D 19/00, C23C 4/12

(54) **VERFAHREN ZUM HERSTELLEN EINES VERBUNDGUSSTEILS**
METHOD FOR PRODUCING A COMPOSITE CASTING PART
PROCEDE DE PRODUCTION D'UNE PIECE DE FONTE COMPOSITE

(30) Priorität: 24.06.1997 DE 19726682; 16.10.1997 DE 19745725
(43) Veröffentlichungstag der Anmeldung: 12.04.2000
(73) Patentinhaber: KS Aluminium Technologie Aktiengesellschaft, 74172 Neckarsulm (DE)
(72) Erfinder: STENZEL, Otto, W., D-71543 Wüstenrot (DE); ZSEBEDITS, Stefan, D-74229 Oedheim (DE)
(74) Vertreter: Dreiss, Fuhlendorf, Steimle & Becker
(86) Internationale Anmeldenummer: EP9803785
(87) Internationale Veröffentlichungsnummer: WO98058755

(56) Entgegenhaltungen:
- EP-A- 0 595 601
- EP-A- 0 659 899
- CH-A- 213 068
- DE-A- 4 212 716
- DE-C- 4 236 911
- US-A- 4 196 237

## Beschreibung

Die Erfindung betrifft ein Verfahren zum Herstellen eines Verbundgussteils aus Leichtmetalllegierung mit einem eingegossenen Eingusskörper, auf dessen Oberfläche vor dem Eingießen eine oder mehrere Schicht(en) aus einer Metalllegierung aufgebracht wird und der Eingußkörper dann mit Leichtmetalllegierung umgossen wird. Bei der Leichtmetalllegierung kann es sich um Magnesiumlegierung oder aber in bevorzugter Weise um Aluminiumlegierung handeln. Werden beispielsweise Zylinderblöcke für Brennkraftmaschinen hergestellt, so besteht das Problem, metallische Eingusskörper, wie z.B. Laufbüchsen oder Lagerverstärkungen, unter Ausbildung einer metallischen Bindung einzugießen.

Die Erzeugung eines metallischen Verbundes beispielsweise zwischen Aluminiumeingusskörpern und dem Aluminiumumguss ist schwierig, da der einzugießende Aluminiumkörper mit einer Oxidhaut überzogen ist, die aufgrund ihrer hohen Schmelztemperatur durch den Umguss nicht erschmolzen sondern nur in Einzelfällen zerstört und weggeschwemmt werden kann. Desweiteren gestaltet sich das Anschmelzen der Oberfläche eines Aluminiumeingusskörpers - wenn nicht eine niedrig schmelzende Hilfsschicht aufgebracht wurde - aufgrund der hohen Wärmeleitfähigkeit des Aluminiums als schwierig. Einerseits muss die Grenzfläche des Eingusskörpers durch den Umguss auf etwas oberhalb der Eutektikumstemperatur, also in das heterogene Gebiet der Eingusskörper-Legierung, erwärmt werden. Der Wärmeeintrag darf aber nicht zu einem zu tiefen Aufschmelzen des Körpers führen. Die oxidüberzogene Eingussoberfläche wird bei druckarmen Gießverfahren vom Umguss schlecht benetzt, so dass der Wärmekontakt schwankend und nicht reproduzierbar vorhersagbar ist. Andererseits wird infolge der hohen Wärmeleitfähigkeit des Aluminiums eines Aluminiumeingusskörpers die übertragene Wärme sehr schnell tief in den Eingusskörper hinein abgeführt. Es bestehen mehrere Probleme:
- Der Leichtmetalllegierung des Umgusses wird während des ersten Kontakts mit dem Eingusskörper sehr viel Wärme entzogen, so dass sie sehr stark überhitzt sein müsste, um an der Grenzfläche zum Eingusskörper das gewünschte Temperaturniveau zu erreichen. Die Wandstärkenverhältnisse sind nur in den seltensten Fällen geeignet, um dieses Temperaturniveau an der gesamten Eingussoberfläche zu gewährleisten.
- Der Wärmeübergangskoeffizient zum Eingusskörper wird bei druckarmen Gießverfahren durch den Oberflächenzustand des Eingusskörpers stark beeinflusst und lässt sich daher nur sehr schwer reproduzieren bzw. vorhersehen.
- Bei dünnwandigen Eingusskörpern, die großflächig an Wänden der Form aufliegen, wirkt sich die Temperatur der Gießform und der Wärmeübergangskoeffizienten zwischen Eingusskörper und Form stark auf den Wärmeabfluss und damit auf die Grenzflächentemperatur aus. Der Wärmeübergang des Eingusskörpers zur Form wird ferner durch Schlichteanhaftungen oder Schmierstellen lokal erheblich beeinflusst, so dass eine prozessfähige reproduzierbare Qualität des Verbunds zwischen Eingusskörper und Umguss nicht möglicht ist. In einigen Fällen verbleibt eine trennende mehr oder minder geschlossene, die Ausbildung eines metallischen Verbunds nicht zulassende Oxidhaut an der Oberfläche des Eingusskörpers. Daneben wird es auch Bereiche mit metallurgisch verbundenen Grenzflächen geben.

Wenn vorstehend von einer Oxidhaut gesprochen wird, so ist dies im weitesten Sinne zu verstehen. Je nach der Umgebung, der der Eingusskörper vor dem Eingießen ausgesetzt war, kann die Oxidhaut beispielsweise auch Nitride, Hydroxide oder andere Bestandteile umfassen.

Die vorstehend geschilderte Problematik ist an sich bekannt. Es wurde mit der DE 42 12 716 A1 bereits vorgeschlagen, einen Aluminiumeingusskörper zunächst einer Beizenbehandlung mit Lauge oder Säure zu unterziehen, um die Aluminiumoxidhaut abzutragen. Anschließend wird die Oberfläche des Aluminiumeingusskörpers durch Eintauchen in eine Zinkatbeize mit Zink abgesättigt, so dass eine erneute Oxidation an der Aluminiumoberfläche des Eingusskörpers verhindert wird.

Das chemische Ätzen und das galvanische Abscheiden von Zink ist einerseits mit hohen Kosten und andererseits infolge der unvermeidbar auftretenden Galvanikschlämme mit einer erheblichen Umweltbelastung verbunden.

In der EP 0 498 719 A1 wird vorgeschlagen, nach einer Ätzbehandlung zum Entfernen der Oxidhaut auf der Oberfläche des Eingusskörpers eine erste diffusionsdichte Schicht galvanisch aufzutragen und auf diese eine zweite Schicht mit hohem Diffusionskoeffizienten in festem Zustand aufzubringen. Es hat sich jedoch gezeigt, dass eine wirklich diffusionsdichte Schicht durch galvanischen Auftrag nicht erreicht werden kann. Im Übrigen verbleiben die Nachteile der Ätzbehandlung.

Besteht der Eingusskörper aus einem artfremden Material, wie z. B. Eisen, so ist nur in den seltensten Fällen mit einer lokalen Legierungsbildung zwischen dem Umguss und dem Eingusskörper zu rechnen. Die Löslichkeit von Eisen in z.B. Magnesium-Legierung ist sehr klein (Magnesium wird z.B. in Eisentiegeln geschmolzen). Die Löslichkeit von Eisen in Aluminium ist deutlich höher als in Magnesium. Die sich vereinzelt bildenden Aluminium-Eisen-Phasen sind aber sehr spröde und zerbrechen meist schon beim Erstarren, so dass praktisch keine metallische Bindung zwischen Aluminium-Umguss und Eisen-Eingusskörper erzeugt wird. Das bekannte Alfinieren von Eisenkörpern in Aluminium-Schmelzen benötigt eine wesentlich längere Verweildauer des Eisenkörpers in einer flüssigen Aluminium-Schmelze als dies bei dem Gießprozess auftritt, es muss daher vor dem eigentlichen Gießprozess durchgeführt werden.

Ein Verfahren mit den Merkmalen des Oberbegriffs des Anspruchs 1 ist aus der vorstehend erwähnten EP-A-0 498 719 oder aus der EP-A-0 659 899 bekannt. Diese Druckschrift EP-A-0 659 899 lehrt, die Oberfläche des Eingußkörpers vor dem Aufsprühen der Schicht(en) auf den Eingußkörper durch Sandstrahlen aufzurauhen.

Aus DE-C-42 36 911 ist ein Spritzverfahren zur Erzeugung von keramischen, metallischen oder hartmetallischen Oberflächenbeschichtungen bekannt, die vorzugsweise, ohne eine nachfolgende spanende Bearbeitung zu erfordern, technisch einsatzfähige Bauteile darstellen. Beim Beschichten werden Strahlpartikel zum Konditionieren der Oberfläche und Spritzpartikel zum Schichtaufbau verwendet oder Konditionierung und Schichtaufbau erfolgen zeitlich nacheinander.

Hiervon ausgehend liegt der vorliegenden Erfindung die Aufgabe zugrunde, die Ausbildung einer metallurgischen Bindung zwischen Eingussteil und Leichtmetalllegierung verfahrensmäßig zu vereinfachen, zu verbessern und reproduzierbar zu erreichen.

Diese Aufgabe wird durch ein Verfahren der eingangs genannten Art gelöst, das dadurch gekennzeichnet ist, dass auf die Oberfläche des Eingusskörpers eine oder mehrere Schicht(en) aus teilerschmolzenen Metalllegierungspartikeln aufgesprüht wird bzw. werden, wobei gleichzeitig durch die hiermit verbundene mechanische Impulsbeaufschlagung eine an der Oberfläche des Eingusskörpers gebildete Oxidhaut zerstört wird und die hierbei anfallenden Oxidpartikel in der sich aufbauenden Schicht verteilt aufgenommen werden. Der so behandelte Eingusskörper wird dann in eine Gießform eingebracht und mit Leichtmetalllegierung umgossen.

Mit der Erfindung wird also vorgeschlagen, auf eine mit starker Umweltbelastung verbundene Ätzbehandlung zum Abtragen der Oxidhaut zu verzichten und stattdessen unter mechanischer Einwirkung, d.h. durch den mechanischen Impuls der aufgesprühten angeschmolzenen bzw. teilerstarrten Partikel, die Oxidhaut zu zerstören. Hierbei verbleiben die Oxide in der gebildeten Schmelzenschicht und stören die beim Eingießen gebildete metallurgische Bindung nur geringfügig. Die nach der Sprühbehandlung des Eingusskörpers an der Oberfläche der aufgesprühten Schicht sich bildenden Oxide und Hydroxide werden beim Gießprozess durch die Leichtmetalllegierung weggeschwemmt bzw. reduziert und als fein verteilte Oxide im Gussgefüge eingelagert.

Mit der vorliegenden Erfindung wurde erkannt, dass durch eine aufgesprühte Schicht aus teilerschmolzenen Metalllegierungspartikeln, vorzugsweise aus Nickel- oder Molybdänlegierung, z. B. Ni95Al5 eine gute metallische Bindung und gleichzeitige Verklammerung an den rauhen Oberflächenstrukturen des so vorbehandelten Eingusskörpers in der Leichtmetalllegierung, insbesondere Aluminiumlegierung erreicht wird.

Da die Eutektikumstemperatur von Al-Ni oberhalb der Eutektikumstemperatur des den Umguss bildenden Al-Si liegt, wäre eigentlich von einem Aufschmelzen von Al-Ni nicht auszugehen. Die Ausbildung einer guten metallischen Bindung des Eingusskörpers in dem Umguss könnte auf die hohe Diffusionsgeschwindigkeit des Nickels im Aluminium zurückzuführen sein. Beim Eingießen des Eingusskörpers kann Nickel aus der die Oberfläche des Eingusskörpers überdeckenden Al-Ni-Schicht herausdiffundieren und dadurch eine metallische Bindung mit dem Umguss ausbilden. Es hat sich auch gezeigt, dass Al-Ni nur eine sehr dünne Oxidhaut ausbildet, die beim Eingießen des Eingusskörpers kaum stört. Es hat sich des Weiteren gezeigt, dass durch die geschilderte Vorgehensweise hohe Gestaltfestigkeiten erhalten werden können.

Die dauerhafte Haftfestigkeit einer Bindung zwischen zwei unterschiedlichen Materialien wird bekannterweise durch die unterschiedlichen thermischen Ausdehnungskoeffizienten der benachbarten Materialien beeinträchtigt. Vorteilhaft ist es daher, wenn die Trennfläche nicht eben, sondern stark zerklüftet ist. Dies wird erfindungsgemäß dadurch erreicht, dass die auf den zu beschichtenden Eingusskörper auftreffenden Tropfen oder zumindest ein ausreichender Anteil von ihnen nicht komplett aufgeschmolzen sind. Die meist spitzförmigen Kristallite ragen aus der aufgetragenen Schicht heraus und vergrößern die Oberfläche der später beim Eingießen benetzten Grenzfläche. Die herausragenden Schichtspitzen heizen sich aber auch stärker auf und verschmelzen daher bevorzugt mit dem Umguss.

Es erweist sich als besonders vorteilhaft, wenn die Schmelzenschicht im Lichtbogenspritzverfahren aufgebracht wird. Hierfür werden zwei Elektroden aus dem aufzutragenden Material oder eine Drahtelektrode und eine Permanentelektrode verwandt und zum Aufsprühen des erschmolzenen Materials mit einem Schutzgasstrom beaufschlagt. Indem die im Lichtbogen geschmolzenen Elektroden von dem Schutzgasstrom erfasst und die hierbei gebildeten Schmelztröpfchen durch den Schutzgasstrom auf hohe Geschwindigkeiten beschleunigt werden, wird der zur Zerstörung der Oxidhaut erforderliche mechanische Impuls erreicht. Die beim Auftreffen mit festen Anteilen behafteten Schmelzentröpfchen reißen beim Auftreffen auf die Oberfläche des Eingusskörpers die Oxidhaut auf und bilden dort eine geschlossene die entstehenden Oxidpartikel oder -fetzen umfassende Schicht.

Zum erfindungsgemäßen Aufbrechen der Oxidschicht könnte auch das Plasmaspritzverfahren angewandt werden, wobei das Beschichtungsmaterial in Form eines Pulvers in ein Plasma eingetragen und dann in einem Schutzgasstrom auf die Oberfläche des Eingusskörpers aufgetragen wird. Der hierfür erforderliche Plasmagenerator ist jedoch aufwendiger, und das Beschichtungsmaterial muss in Pulverform vorliegen, so dass dieses Verfahren gegenüber dem Lichtbogenspritzverfahren teurer sein dürfte.

Die Anwendung eines Flammspritzverfahrens ist grundsätzlich ebenfalls möglich. Dieses Verfahren ist jedoch mit dem Nachteil behaftet, dass der Beschichtungswerkstoff durch die Flamme selbst partiell oxidiert wird. Die Spritzschicht beinhaltet daher einen stark erhöhten Oxydgehalt. Die Schicht selber wird dadurch geschwächt und auch die Bindungsfläche zwischen Schicht und Umguss reduziert.

Es versteht sich, dass der Eingusskörper bevorzugtermaßen auf seiner gesamten Oberfläche in der erfindungsgemäßen Weise behandelt wird, bevor er in die Form eingelegt und mit Leichtmetalllegierung umgossen wird. Besonders kritisch erweist sich das Eingießen aber im angussfernen Bereich der Form, da dort aus Gründen der Erstarrungscharakteristik naturgemäß die Anbindung am schlechtesten ist. Insoweit wird vorgeschlagen, den Eingusskörper zumindest in diesem Bereich in der erfindungsgemäßen Weise zu behandeln, um dort die Ausbildung einer metallurgischen Bindung zu verbessern.

## Patentansprüche

1. Verfahren zum Herstellen eines Verbundgussteils aus Leichtmetalllegierung, insbesondere eines Zylinderblocks für Brennkraftmaschinen, mit einem eingegossenen Eingusskörper, auf dessen Oberfläche vor dem Eingießen eine oder mehrere Schicht(en) aus einer Metalllegierung aufgebracht wird und der Eingußkörper dann mit Leichtmetalllegierung umgossen wird, **dadurch gekennzeichnet, dass** auf die Oberfläche des Eingusskörpers eine oder mehrere Schicht(en) aus teilerschmolzenen Metalllegierungspartikeln aufgesprüht wird bzw. werden, wobei gleichzeitig durch die hiermit verbundene mechanische Impulsbeaufschlagung eine an der Oberfläche des Eingusskörpers gebildete Oxidhaut zerstört wird und die hierbei anfallenden Oxidpartikel in der sich aufbauenden Schicht verteilt aufgenommen werden.

2. Verfahren nach Anspruch 1, **dadurch gekennzeichnet, dass** die teilerschmolzenen Metalllegierungspartikel aus Nickel- oder Molybdänlegierung bestehen.

3. Verfahren nach Anspruch 1 oder 2, **dadurch gekennzeichnet, dass** die Schicht im Lichtbogenspritzverfahren aufgebracht wird.

4. Verfahren nach Anspruch 1 oder 2, **dadurch gekennzeichnet, dass** die Schicht durch Plasmaspritzen aufgebracht wird.

5. Verfahren nach einem der vorstehenden Ansprüche, **dadurch gekennzeichnet, dass** die Leichtmetalllegierung eine Aluminiumlegierung ist und die teilerschmolzenen Metalllegierungspartikel aus einer Aluminium-Nickel-Legierung gebildet sind.

6. Verfahren nach einem der vorstehenden Ansprüche, **dadurch gekennzeichnet, dass** die aufgesprühte Schmelzenschicht aus Stoffen gebildet ist, deren Siedepunkt oberhalb von 2000° C liegt.

7. Verfahren nach einem der vorhergehenden Ansprüche, **dadurch gekennzeichnet, dass** der Eingusskörper aus Leichtmetalllegierung besteht.

8. Verfahren nach einem der vorhergehenden Ansprüche, **dadurch gekennzeichnet, dass** der Eingusskörper aus Eisenwerkstoff besteht.

## Claims

1. Method for producing a composite cast part from a light metal alloy, in particular a cylinder block for internal-combustion engines, with a cast in-gate member, on the surface of which one or more layer(s) of a metal alloy is/are applied before casting and the in-gate member is then encapsulated by light metal alloy, **characterised in that** one or more layer(s) of partially molten metal alloy particles is/are sprayed onto the surface of the in-gate member, an oxide skin formed on the surface of the in-gate member simultaneously being destroyed owing to the mechanical pulse loading connected therewith and the oxide particles produced in the process being absorbed in a distributed manner in the layer which forms.

2. Method according to claim 1, **characterised in that** the partially molten metal alloy particles consist of nickel or molybdenum alloy.

3. Method according to claim 1 or 2, **characterised in that** the layer is applied by the arc spraying method.

4. Method according to claim 1 or 2, **characterised in that** the layer is applied by plasma spraying.

5. Method according to any of the preceding claims, **characterised in that** the light metal alloy is an aluminium alloy and the partially molten metal alloy particles are formed from an aluminium/nickel alloy.

6. Method according to any of the preceding claims, **characterised in that** the sprayed-on molten layer is formed from materials of which the boiling point is above 2,000°C.

7. Method according to any of the preceding claims, **characterised in that** the in-gate member consists of light metal alloy.

8. Method according to any of the preceding claims, **characterised in that** the in-gate member consists of iron material.

## Revendications

1. Procédé de production d'une pièce de fonderie composite en alliage léger, en particulier un bloc-cylindres pour moteur à combustion interne, avec un insert enrobé par coulée, sur la surface duquel une ou plusieurs couches d'un alliage métallique sont déposées avant enrobage par coulée, l'insert étant ensuite enrobé d'alliage léger coulé, **caractérisé en ce que** l'on dépose par pulvérisation sur la surface de l'insert une ou plusieurs couches de particules d'alliage métallique partiellement fondues, l'impulsion mécanique résultante ayant simultanément pour effet de détruire une peau oxydée formée à la surface de l'insert et les particules d'oxyde résultantes étant reçues de manière dispersée dans la couche en formation.

2. Procédé selon la revendication 1, **caractérisé en ce que** les particules d'alliage métallique partiellement fondues consistent en alliage de nickel ou de molybdène.

3. Procédé selon la revendication 1 ou 2, **caractérisé en ce que** la couche est déposée par projection à l'arc électrique.

4. Procédé selon la revendication 1 ou 2, **caractérisé en ce que** la couche est appliquée par pulvérisation par plasma.

5. Procédé selon l'une des revendications précédentes, **caractérisé en ce que** l'alliage léger est un alliage d'aluminium et **en ce que** les particules d'alliage métallique partiellement fondues sont en alliage aluminium-nickel.

6. Procédé selon l'une des revendications précédentes, **caractérisé en ce que** la couche fondue projetée par pulvérisation se compose de substances dont le point de fusion est supérieur à 2000 °C.

7. Procédé selon l'une des revendications précédentes, **caractérisé en ce que** l'insert est en alliage léger.

8. Procédé selon l'une des revendications précédentes, **caractérisé en ce que** l'insert est en un produit ferreux.
